# EUROPEAN PATENT APPLICATION

(11) **EP 3 881 732 A1**
(43) Date of publication of application: **22.09.2021**
(21) Application number: 20163784.0
(22) Date of filing: 17.03.2020
(51) Int. Cl.: A47J 31/44

(54) **AUTOMATIC COFFEE MACHINE**

(71) Applicant: BSH Hausgeräte GmbH, 81739 München (DE)
(72) Inventor: Gortnar, Primoz, 1215 Medvode (SI); Kozelj, Evgen, 3327 Smartno ob Paki (SI); Solar, Lovro, 3330 Mozirje (SI)

(57) **Abstract**

An automatic coffee machine (10) having a housing with a front portion (11) accessible to a user and a housing side portion (12) equipped with a removable service panel (20) having a service door (21) and a gripping portion (22) for handling the service panel (20) whereby the direction of unlocking the service panel (20) is the same as the direction of the service panel (20) removing.

The present invention provides a simple and intuitive solution of mounting and demounting of the service panel of the coffee machine. The user has a positive feeling about the assembling and disassembling of the service panel and also a good impression about the coffee machine.

## Description

### Background of the invention

The present invention relates to an automatic coffee machine having a housing with a front portion accessible to a user and a housing side portion equipped with a removable service panel having a service door and a gripping portion for handling the service panel.

### State of the art

The automatic coffee machines are well known in the state of the art and are widely used not only in households but also in restaurants, catering organizations and other high volume food production institutions. Typically, most of the processes in the automatic coffee machines from grinding of the coffee beans, through the brewing process to the final cleaning are performed in automatic way without user involvement. Not all of the processes are performed by the device automatically, for instance the maintenance has to be done by the user manually. For this reason an automatic coffee machines are provided with a service door in order to provide the access to the inside of the machine and carry out the cleaning operations. Service doors of the coffee machines are inserted into the coffee machine body and protected before accidental demounting on different ways e.g. thanks to buttons, latches etc.

The patent application EP 2 946 703 A1 discloses a hot beverage preparation device, for example in the form of a built-in fully automatic coffee machine and particularly suitable for household or office purposes, comprises a front surface accessible to a user, in which an output section for dispensing a finished hot beverage and a service section for carrying out sales and/or disposal activities are arranged. The hot beverage preparation device further comprises a first door on the front surface which covers the dispensing section in a closed position and which makes the dispensing section accessible in an open position.

The patent application DE 10 2012 200 312 A1 discloses the coffee machine which has a front portion comprising a control portion and a three-sided frame surrounding the control portion. The frame is provided with a left service door, a fixed diaphragm and a right service door. A supply shed is formed in the frame, so that the milk bottle is accommodated inside the supply shed, by opening the right service door. The left and right service doors are pivotable while the control portion is fixed.

Presented solutions do not provide a simple, intuitive solution of mounting and demounting of the service door of the coffee machine.

### The aim of the invention

It is the object of the present invention to provide a further development with an advantage over the state of the art an provide an automatic coffee machine with removable service door which is operated in easy and intuitive way by the user.

### Summary of the invention

This object is solved by an automatic coffee machine having a service panel whereby the direction of unlocking the service panel is the same as the direction of the service panel removing. The service panel of a coffee machine. The service panel is a part equipped with a service door which are demountable and which are provided to make the maintenance of the inside of the device by the user possible. Moreover, the service door are provided in order to protect the inside of the coffee machine and also to protect the user when the device is working. The service panel has a gripping portion which is placed on a lower portion of the service panel and is provided to make the inserting and removing the service panel of the coffee machine easy for the user. The service panel is also provided with a service door which covers the inside of the coffee machine and are designed in such a way to give a particularly appealing visual impression for the consumer and also to protect the user from getting hurt when the device is in operation mode.

### Preferred embodiment of the invention

In the preferred embodiment of the invention the unlocking and removing of the service panel is performed towards the user.
The gripping portion of the service door has a cavity inside of which a handle is placed. The handle is pivotally mounted inside the cavity and the motion of the handle is achieved thanks to the spring. The handle is not only simple, intuitive and easy to use but also it gives better impression for the user when the service panel reaches its end position what means when the service panel is mounted on the coffee machine housing. The direction of the movement of the handle towards the user is intuitive and natural for the user so the impression is better and the user can unlock and remove the service panel without any effort and attention to this activity.

In the preferred embodiment of the invention the gripping portion of the service panel has a cavity with a handle which is pivotally mounted inside the cavity. The cavity is a simple opening in which the handle is placed. The handle is an element which is pivotally mounted inside the cavity by the torsion spring. The user pushes the handle automatically during gripping the service panel and the handle returns to its previous position when the handle is released by the user. The positive effect is that the user operates the service panel automatically, using only intuitive activities like e.g. catching the gripping portion of the service panel.

In another embodiment of the invention the handle has a locking pin which interlocks with a locking rib placed on the housing of the coffee machine. In order to place the service panel on the housing of the coffee machine the locking pin of the handle engages with the locking rib. The locking rib is an integral element of the coffee machine housing. The shape of the locking pin is designed in such a way to firmly engage with the locking rib. In order to release the service panel from the coffee machine housing the handle is pushed down by the user and the locking pin and the locking rib disengages. The positive effect is that such connection is very simple and intuitive for the user.

In the preferred embodiment of the invention the locking rib has a slope which interlocks with the locking pin and pushes said locking pin down. The slope of the locking rib is designed in such a way to make the engagement between the locking pin and the locking rib and additionally to give the user good impression about the device and general feeling about its operation.
The present invention provides a simple and intuitive solution of mounting and demounting of the service panel of the coffee machine. The user has a positive feeling about the assembling and disassembling of the service panel and also a good impression about the coffee machine.

### Brief description of the figures

The construction of the invention, however, together with additional objects and corresponding advantages will be best understood from the following description of specific embodiments and in connection with the accompanying drawing.

In the drawing:
Fig. 1 shows a coffee machine in isometric view,
Fig. 2 shows a service panel in isometric view,
Fig. 3 shows a schematic view of a cross section of the service panel in a demounted position,
Fig. 4 shows a schematic view of a cross section of the service panel in a mounted position.

### Detail description of the invention

In cooperation with attached drawing, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical or comparable components.

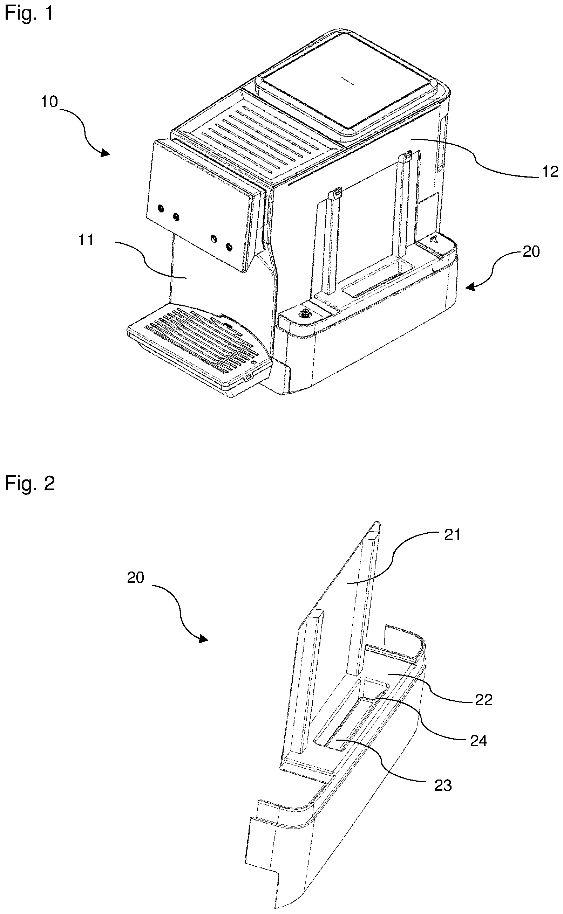

Fig. 1 shows a coffee machine 10 in isometric view. The coffee machine 10 has a front portion 11 which is provided with a control panel, a spout and a drip tray on which the cup should be placed in order to collect a beverage. The coffee machine 10 has also a side portions 12. One of the side portion 12 is provided with a service panel 20. The service panel 20 is an independent and demountable element of the coffee machine 10 which covers the inside of the device. The service panel 20 can be demounted from the housing of the coffee machine 10 in order to perform the cleaning activities of the internal elements of the coffee machine 10.

Fig. 2 shows a service panel 20 in isometric view. The service panel 20 is an independent element of the housing of the coffee machine 10 and can be demounted form said housing in order to clean the inside of the coffee machine 10 or to perform other necessary activities e.g. service activities. The service panel 20 has a service door 21 which after mounting align with the side portion 12 (not shown on the figure) of the coffee machine 10. The lower portion of the service panel 20 is a gripping portion 22 which has a cavity 23 with a handle 24 pivotally mounted inside the cavity 23. The cavity 23 is a simple hole of a rectangular shape designed to receive the hand of the user in order to push the handle 24 and release the service panel 20 from the housing of the coffee machine 10. The direction of releasing the service panel 20 by the handle 24 and demounting of the service panel 20 is performed in the same direction towards the user.

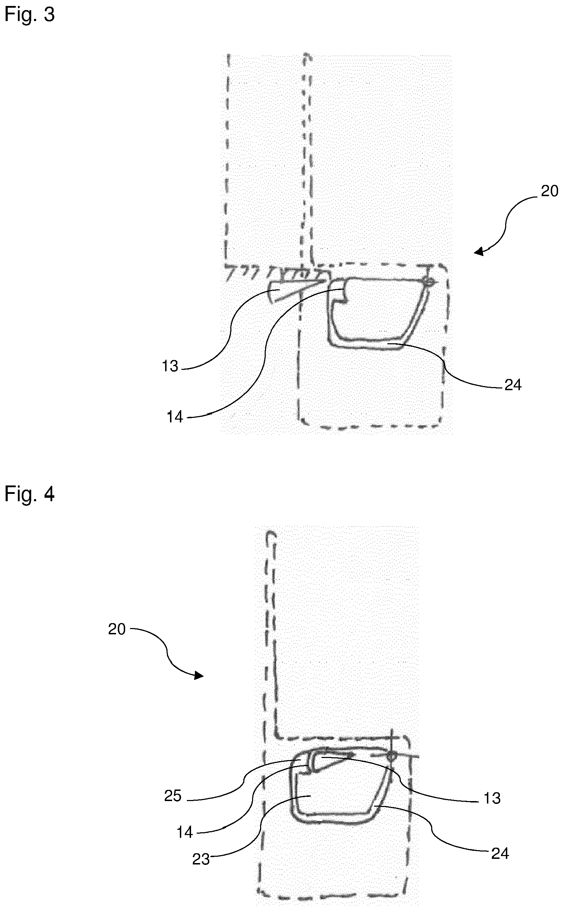

Fig. 3 shows a schematic view of a cross section of the service panel 20 in a demounted position. In such position the handle 24 is in its starting position and the spring is not pressed. In order to mount the service panel 20 into the coffee machine 10 housing the user have to insert a hand into the cavity 23 and push the handle 24 down. The handle 24 is pressed by the user during the service panel 20 is mounting into the coffee machine 10 housing. After mounting the service panel 20 the handle 24 returns into its initial position.

Fig. 4 shows a schematic view of a cross section of the service panel 20 in mounted position. In the mounted position of the service panel 20 the handle 24 is in its starting position. The slope 14 of the locking pin 25 engages with the locking rib 13 which is an integral part of the coffee machine 10 housing. The handle 24 is mounted inside the cavity 23 by the torsion spring which is responsible for the movement of the handle 24. In the mounted position when the handle 24 is in its initial position the torsion spring is not tensioned. In order to release the service panel 20 form the coffee machine 10 body the user have to put his hand into the cavity 23 and push the handle 24 down. The locking rib 13 disengages from the locking pin 25 and the service panel 20 can be demounted from the coffee machine 10 housing.

The present invention provides a simple and intuitive solution of mounting and demounting of the service panel of the coffee machine. The user has a positive feeling about the assembling and disassembling of the service panel and also a good impression about the coffee machine.

### REFFERRENCE SIGNS

- 10: coffee machine
- 11: front portion
- 12: side portion
- 13: locking rib
- 14: slope

- 20: service panel
- 21: service door
- 22: gripping portion
- 23: cavity
- 24: handle
- 25: locking pin

## Claims

1. An automatic coffee machine (10) having a housing with a front portion (11) accessible to a user and a housing side portion (12) equipped with a removable service panel (20) having a service door (21) and a gripping portion (22) for handling the service panel (20) **characterized in that** the direction of unlocking the service panel (20) is the same as the direction of the service panel (20) removing.

2. The automatic coffee machine (10) according to claim 1, **characterized in that** the unlocking and removing of the service panel (20) is performed towards the user.

3. The automatic coffee machine (10) according to any of the preceding claims, **characterized in that** the gripping portion (22) of the service panel (20) has a cavity (23) with a handle (24) which is pivotally mounted inside the cavity (23).

4. The automatic coffee machine (10) according to any of the preceding claims, **characterized in that** the handle (24) has a locking pin (25) which interlocks with a locking rib (13) placed on the housing of the coffee machine (10).

5. The automatic coffee machine (10) according to any of the preceding claims, **characterized in that** the locking pin (25) is an integrated part of the handle (24).

6. The automatic coffee machine (10) according to any of the preceding claims, **characterized in that** the locking rib (13) has a slope (14) which interlocks with the locking pin (25) and pushes said locking pin (25) down.
